# FASCICULE DE BREVET EUROPEEN

(11) **EP 4 048 190 B1**
(45) Date de publication et mention de la délivrance du brevet: **04.12.2024**
(21) Numéro de dépôt: 20789621.8
(22) Date de dépôt: 15.10.2020
(51) Int. Cl.: A61C 8/00, A61C 9/00

(54) **PILIER DE CICATRISATION DE LA GENCIVE POUR UN IMPLANT DENTAIRE**
GINGIVAFORMER FÜR EIN ZAHNIMPLANTAT
GINGIVA HEALING ABUTMENT FOR A DENTAL IMPLANT

(30) Priorité: 23.10.2019 FR 1911877
(43) Date de publication de la demande: 31.08.2022
(73) Titulaire: Creadent Montauban, 82000 Montauban (FR)
(72) Inventeur: CAMPS, Jacques, 82800 Bioule (FR)
(74) Mandataire: Argyma
(86) Numéro de dépôt international: PCT/EP2020/079073
(87) Numéro de publication internationale: WO 2021/078628

(56) Documents cités:
- WO-A1-2009/051367
- WO-A1-2009/051367
- WO-A1-2017/085288
- WO-A1-2017/085288
- WO-A2-01/85050
- WO-A2-01/85050
- WO-A2-2019/030525
- WO-A2-2019/030525
- US-A1- 2014 205 969

## Description

### DOMAINE TECHNIQUE

La présente invention concerne le domaine de l'implantologie dentaire et vise plus particulièrement un pilier de cicatrisation de la gencive autour d'un implant pour la pose d'une dent prothétique.

De manière connue, un patient peut se faire poser un système implantaire en lieu et place d'une dent manquante, à savoir une dent artificielle lui permettant de retrouver une mastication normale et une dentition esthétique.

De manière connue, un système implantaire comprend un implant configuré pour être fixé dans l'os maxillaire du patient, une dent prothétique d'aspect semblable à la partie apparente de la dent manquante et un pilier prothétique assurant la connexion entre l'implant et la dent prothétique.

En pratique, l'implant comprend une paroi cylindrique extérieure filetée de manière à être vissé à l'os maxillaire du patient et une paroi cylindrique intérieure taraudée formant un logement d'implant. Le pilier prothétique comprend quant à lui une tige filetée configurée pour être vissée dans le logement d'implant. Autrement dit, la tige filetée et la paroi cylindrique intérieure taraudée coopèrent par vissage pour monter le pilier prothétique dans l'implant. La dent prothétique est quant à elle vissée ou scellée au pilier prothétique, avec ou sans l'aide d'une vis de serrage.

De manière connue, le système implantaire est posé en plusieurs temps. Dans un premier temps, un forage est opéré dans la gencive et dans l'os maxillaire au niveau de la dent manquante, où l'implant est inséré. Dans un deuxième temps, une prise d'empreintes de la bouche du patient est réalisée afin de fabriquer une dent prothétique de forme et de taille adaptées à celles de la dent manquante. Le pilier prothétique et la dent prothétique sont ensuite posés dans un troisième temps.

Le délai entre la pose de l'implant et la prise d'empreintes est d'environ trois à six mois suivant le patient afin de permettre la cicatrisation de la gencive autour de l'implant ainsi que l'immobilisation de l'implant au sein de l'os maxillaire, connue de l'homme du métier sous le terme « d'ostéointégration ».

En pratique, lors de la pose de l'implant, une vis de cicatrisation est insérée dans le logement d'implant. Celle-ci comprend une tige filetée semblable à celle du pilier prothétique qui permet d'éviter aussi bien le dépôt de résidus alimentaires dans le logement d'implant que le recouvrement par la gencive du filetage de sa paroi cylindrique intérieure taraudée, et une tête plate montée sur la tige filetée, favorisant la cicatrisation de la gencive autour de l'implant. Dans certains cas, par exemple lorsque le patient est fumeur ou suite à une greffe osseuse, une vis de couverture est insérée afin de favoriser l'ostéointégration, remplacée par la vis de cicatrisation par la suite. Une dent prothétique provisoire peut être montée sur la vis de couverture et sur la vis de cicatrisation dans un but esthétique.

Lors de la prise d'empreintes, qu'elle soit physique ou optique, la vis de cicatrisation doit être retirée afin de mesurer précisément l'espace disponible laissé par la dent manquante et la position de l'implant dans cet espace disponible. Dans le cas d'une prise d'empreintes physique, un moulage de la bouche du patient est réalisé. Dans le cas d'une prise d'empreintes optique, un transfert est inséré dans le logement d'implant et un scanner mesure l'espace disponible et la position relative du transfert dans l'espace disponible, donnant accès à la position de l'implant. La vis de cicatrisation est ensuite réinsérée, puis retirée pour poser le pilier prothétique et la dent prothétique.

Toutes ces manipulations de la vis de cicatrisation sont chronophages, désagréables pour le patient et augmentent le risque d'inflammation des gencives et de l'os maxillaire au niveau de l'implant, connu de l'homme du métier sous le terme de « péri-implantite ». La péri-implantite a pour conséquence une rétractation de la gencive au niveau de l'implant, pouvant laisser apparent une partie de l'implant, ce qui est douloureux pour le patient, inesthétique et peut nécessiter une nouvelle intervention.

Par ailleurs, la vis de cicatrisation présente l'inconvénient d'entraîner une cicatrisation de la gencive suivant un contour gingival circulaire peu naturel, si bien que le profil d'émergence de la dent prothétique une fois posée n'est pas naturel et donc peu esthétique. Autrement dit, l'interface entre la dent prothétique et la gencive cicatrisée ne présente pas un profil concave harmonieux. En outre, de la nourriture est susceptible de se loger à l'interface entre la dent prothétique et la gencive, ce qui peut conduire à une infection ou un autre désagrément.

Pour pallier à ces inconvénients, il est connu dans l'art antérieur de remplacer la vis de cicatrisation par un pilier de cicatrisation comprenant une tête comprenant un logement de tête dans laquelle est insérée une vis de serrage reliant la tête à l'implant. Cette tête présente une forme conique choisie pour permettre une cicatrisation de la gencive suivant un contour gingival adapté à la dent prothétique qui sera posée. Par ailleurs, ce pilier de cicatrisation se décline suivant quatre formes référencées par une couleur, suivant que la dent manquante est une incisive, une canine, une prémolaire ou une molaire. Lors de la prise d'empreintes optique, ce pilier de cicatrisation remplace le transfert et n'a donc pas besoin d'être retiré.

On connaît également par la demande de brevet WO2014158534A1 un autre pilier de cicatrisation comprenant un pied configuré pour être inséré dans le logement de l'implant et une tête de diamètre analogue à la dent prothétique permettant une cicatrisation de la gencive suivant un contour gingival adapté. Le pied et la tête comprennent respectivement une cavité traversante de pied et une cavité traversante de tête dans le prolongement du logement d'implant, dans lesquelles est insérée une vis de serrage pour relier l'implant, le pied et la tête et ainsi former le pilier de cicatrisation. De plus, la tête présente des encoches supérieures dont la disposition et la forme indiquent la taille de la tête et sa position par rapport à l'implant. Seize combinaisons d'encoches différentes sont suggérées. Lors de la prise d'empreintes optique, ce pilier de cicatrisation remplace ainsi le transfert.

Dans l'art antérieur, la demande de brevet WO2017085288A1 enseigne également un pilier de cicatrisation dont la tête présente une surface supérieure permettant de remplacer le transfert lors de la prise d'empreintes, grâce à une forme asymétrique avec un bord qui définit un repère orienté. La demande de brevet US2014205969A1 divulgue un autre pilier de cicatrisation configuré pour être monté dans un implant avant la pose d'une dent prothétique, le pilier de cicatrisation comprenant un pied et une tête qui sont alignés selon un axe Z et reliés par une vis de serrage s'étendant selon l'axe Z, le pied comprenant une partie inférieure de pied configurée pour coopérer avec l'implant et une partie supérieure de pied, la tête comprenant une partie inférieure de tête configurée pour coopérer avec la partie supérieure de pied, de manière à monter la tête sur le pied, et une partie supérieure de tête ayant une forme déterminée. Ledit pilier de cicatrisation comprend au moins un organe de référence définissant un repère orienté (X, Y, Z) selon au moins deux dimensions ledit organe de référence étant monté de manière mobile et rapportée sur la partie supérieure de tête afin de permettre de sélectionner au moins une position élémentaire optimale parmi la pluralité de positions élémentaires en fonction de la forme déterminée de ladite partie supérieure de tête.

Ces deux piliers de cicatrisation présentent toutefois deux inconvénients notables. D'une part, leur position angulaire par rapport à l'axe de l'implant est déterminée de façon peu précise, ce qui a pour conséquence que la dent prothétique ne s'adapte pas parfaitement à l'espace disponible et à l'implant. Le montage de la dent prothétique est alors difficile, particulièrement dans le cas d'un forage dans la gencive décentré par rapport à l'espace disponible, la dent prothétique présentant dans ce cas un profil en porte-à-faux, ce qui est peu esthétique et peut conduire de la nourriture à se loger à l'interface entre la dent prothétique et la gencive, comme expliqué précédemment.

D'autre part, pour réaliser le transfert d'empreintes optiques et ainsi déterminer la forme de la dent définitive, il est nécessaire d'utiliser un logiciel métier capable de lire le code des couleurs ou des encoches de pilier de cicatrisation. Cela présente de nombreux inconvénients étant donné que les professionnels doivent s'équiper de logiciels métiers spécifiques, c'est-à-dire où les informations correspondant à chaque couleur ou chaque encoche ont été implémentées, ainsi que d'une gamme importante de piliers de cicatrisation.

La présente invention se propose d'éliminer au moins certains des inconvénients évoqués.

### PRESENTATION DE L'INVENTION

L'invention concerne un pilier de cicatrisation configuré pour être monté dans un implant avant la pose d'une dent prothétique, le pilier de cicatrisation comprenant un pied et une tête qui sont alignés selon un axe Z et reliés par une vis de serrage s'étendant selon l'axe Z, le pied comprenant une partie inférieure de pied configurée pour coopérer avec l'implant et une partie supérieure de pied, la tête comprenant une partie inférieure de tête configurée pour coopérer avec la partie supérieure de pied, de manière à monter la tête sur le pied, et une partie supérieure de tête ayant une forme déterminée.

L'invention est remarquable en ce que le pilier de cicatrisation comprend au moins un organe de référence définissant un repère orienté selon au moins deux dimensions et configuré pour coopérer avec le pied afin de définir une pluralité de positions élémentaires du repère orienté par rapport audit pied selon l'axe Z, ledit organe de référence étant monté de manière mobile par rapport à la partie supérieure de tête afin de permettre de sélectionner au moins une position élémentaire optimale parmi la pluralité de positions élémentaires en fonction de la forme déterminée de ladite partie supérieure de tête.

De manière avantageuse, le pilier de cicatrisation n'a pas besoin d'être retiré ou manipulé lors de la prise d'empreintes pour définir la forme et la taille de la dent prothétique. La dent prothétique peut en effet être définie grâce à l'organe de référence, monté sur la partie supérieure de tête donc visible sans manipulation quelconque. Le risque de péri-implantite est ainsi réduit et la prise d'empreintes est moins chronophage et plus agréable pour le patient.

De préférence, l'organe de référence définit un repère selon trois dimensions, de manière à définir précisément la forme et la taille de la dent prothétique.

Selon un aspect de l'invention, l'organe de référence est monté de manière rapportée sur la partie supérieure de tête. De manière avantageuse, un organe de référence standard peut être monté sur une tête de dimension et de forme quelconques. Autrement dit, si la tête présente une dimension et une forme adaptées à la dent manquante, telle qu'une incisive ou une canine, l'organe de référence est quant à lui universel, ce qui permet une économie de matériel et de coût.

Selon un aspect de l'invention, l'organe de référence comprend au moins un col comprenant au moins une portion en saillie s'étendant radialement par rapport à l'axe Z, de manière à définir le repère. De manière avantageuse, la portion en saillie s'étend suivant une direction angulaire formant l'un des axes du repère. Le repère est ainsi défini de manière simple et lisible facilement par tout organe de prise d'empreintes physique ou optique.

De préférence, la portion en saillie comporte une longueur radiale en saillie supérieure à 2mm, préférentiellement supérieure ou égale à 3mm. De préférence, la longueur radiale en saillie est inférieure à 5mm, afin d'éviter que la portion en saillie ne s'étende en saillie de la partie supérieure de tête, ce qui occasionnerait une gêne pour le patient.

Selon un aspect préféré, la portion en saillie se présente sous la forme d'au moins un doigt de référence s'étendant radialement par rapport à l'axe Z. Un doigt de référence permet avantageusement de définir précisément une direction angulaire formant un des axes du repère. Préférentiellement, la portion en saillie se présente sous la forme d'au moins deux doigts de référence, de préférence trois doigts de référence, de manière à définir de manière plus précise le repère, de manière à fabriquer une dent prothétique s'adaptant parfaitement à la bouche du patient. Une petite incertitude de mesure à l'échelle d'une dent peut en effet conduire à fabriquer une dent ne s'insérant pas dans la bouche du patient.

Selon un aspect de l'invention, l'organe de référence comprend au moins un col comprenant au moins une portion réduite s'étendant radialement par rapport à l'axe Z et comportant une longueur radiale réduite inférieure à 3mm, de préférence inférieure ou égale à 2mm. De préférence, la longueur radiale réduite est supérieure à 0,5mm. En pratique, il arrive fréquemment que l'implant ne soit pas monté au centre de la cavité formée par la dent manquante si bien que la tête du système de fabrication est montée de manière décentrée par rapport à l'axe Z. La portion réduite peut ainsi avantageusement être positionnée angulairement de sorte à ne pas être en saillie radialement par rapport à la tête. Une telle portion réduite permet ainsi d'augmenter le confort du patient et de faciliter son montage.

De préférence, la portion réduite s'étend sur une plage angulaire autour de l'axe Z supérieure à 90°. Préférentiellement la plage angulaire est supérieure à 150°, de préférence encore supérieure à 180°.

Préférentiellement, le col de l'organe de référence s'étend dans un plan transversal par rapport à l'axe Z.

Selon un aspect de l'invention, l'organe de référence comprend une cavité de référence d'axe Z traversante, au sein de laquelle s'étend la vis de serrage. De manière avantageuse, l'organe de référence est monté solidaire au pilier de cicatrisation et n'a pas besoin d'être monté puis retiré lors de prise d'empreintes.

Selon un autre aspect de l'invention, la partie supérieure de pied comprenant au moins un premier organe d'emboîtement, la partie inférieure de tête comprenant au moins un deuxième organe d'emboîtement configuré pour coopérer avec le premier organe d'emboîtement de manière à monter la tête sur le pied, le premier organe d'emboîtement comprend au moins huit dents radiales par rapport à l'axe Z et le deuxième organe d'emboîtement comprend au moins huit encoches radiales configurées pour coopérer avec les dents radiales afin de définir une pluralité de positions élémentaires entre le pied et la tête par rapport à l'axe Z.

De manière avantageuse, le positionnement angulaire du pilier de cicatrisation par rapport à l'implant est précis et fin, ce qui permet une pose facilitée du pilier de cicatrisation et un meilleur rendu esthétique et fonctionnel pour le patient.

De manière préférée, le premier organe d'emboîtement comprend au moins douze dents radiales, de préférence au moins dix-huit dents radiales, de préférence au moins vingt-quatre dents radiales, pour un positionnement angulaire fin et précis du pilier de cicatrisation par rapport à l'implant.

De manière préférée, le deuxième organe d'emboîtement comprend au moins douze encoches radiales, de préférence au moins dix-huit encoches radiales, de préférence au moins vingt-quatre encoches radiales, pour un positionnement angulaire fin et précis du pilier de cicatrisation par rapport à l'implant.

Selon un aspect, la tête comprend une cavité de tête d'axe Z traversante, au sein de laquelle s'étend la vis de serrage. Une telle tête possède ainsi une double fonction de dent prothétique provisoire. Aucune dent prothétique provisoire est ainsi montée de manière rapportée sur le pilier de cicatrisation. Le pilier de cicatrisation est ainsi moins encombrant, moins onéreux et plus simple à manipuler.

Selon un aspect, la tête forme une dent prothétique de cicatrisation configurée pour avoir sensiblement la forme et la taille de la dent prothétique à poser, pour un rendu esthétique et fonctionnel pour le patient durant toute la période de cicatrisation.

Selon un autre aspect de l'invention, le pied comprend au moins un troisième organe d'emboîtement et l'organe de référence comprend un corps annulaire d'axe Z comprenant au moins un quatrième organe d'emboîtement configuré pour coopérer avec le troisième organe d'emboîtement afin de définir une pluralité de positions élémentaires entre le pied et l'organe de référence par rapport à l'axe Z. Un tel organe de référence occupe un volume restreint et son positionnement angulaire par rapport au pied, et donc à l'implant, est précis et fin. La détermination de la forme et de la taille de la dent prothétique lors du transfert d'empreintes est ainsi précise.

Selon un aspect, le troisième organe d'emboîtement comprend au moins trois dents axiales par rapport à l'axe Z. De préférence, le quatrième organe d'emboîtement comprend au moins trois encoches axiales configurées pour coopérer avec les dents axiales afin de définir une pluralité de positions élémentaires entre le pied et l'organe de référence par rapport à l'axe Z.

Préférentiellement, le troisième organe d'emboîtement comprend trois dents axiales par rapport à l'axe Z. Préférentiellement, le quatrième organe d'emboîtement comprend trois encoches axiales. De manière avantageuse, le positionnement de l'organe de référence et plus précisément d'un de ses doigts de référence est facilité.

L'invention concerne également un ensemble d'un implant et d'un pilier de cicatrisation tel que présenté précédemment, l'implant comprenant une extrémité de fixation configurée pour être fixée à l'os maxillaire d'un patient et une extrémité gingivale configurée pour s'étendre dans la gencive du patient et comprenant un logement d'implant comprenant un taraudage, la partie inférieure de pied du pilier de cicatrisation étant montée dans le logement d'implant et la vis de serrage du pilier de cicatrisation coopérant avec le taraudage du logement d'implant.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique en perspective du pilier de cicatrisation selon l'invention ;
La figure 2A et
La figure 2B sont des représentations schématiques en perspective du pied du pilier de cicatrisation selon l'invention ;
La figure 2C est une représentation schématique en perspective du pied du pilier de cicatrisation selon une forme alternative de l'invention ;
La figure 3A et
La figure 3B sont des représentations schématiques en perspective de la tête du pilier de cicatrisation selon l'invention ;
La figure 4A et
La figure 4B sont des représentations schématiques en perspective de l'organe de référence du pilier de cicatrisation selon l'invention ;
La figure 4C est une représentation schématique en coupe transversale du col de l'organe de référence selon l'invention ;
La figure 4D est une représentation schématique en coupe transversale du col de l'organe de référence monté décentré par rapport à l'axe Z selon une forme alternative de réalisation de l'invention ;
La figure 4E est une représentation schématique en perspective de l'organe de référence du pilier de cicatrisation selon une forme alternative de l'invention ;
La figure 5 est une représentation schématique en perspective de la vis de serrage du pilier de cicatrisation selon l'invention ;
La figure 6A et
La figure 6B sont des représentations schématiques en perspective du procédé de montage du pilier de cicatrisation selon l'invention ; et
La figure 7A et
La figure 7B sont des représentations schématiques en coupe longitudinale du pilier de cicatrisation selon l'invention en position montée centrée et décentrée par rapport à l'axe Z respectivement.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

De manière connue, un système implantaire comprend un implant configuré pour être fixé dans l'os maxillaire d'un patient en lieu et place d'une dent manquante, une dent prothétique d'aspect semblable à la partie apparente de la dent manquante et un pilier prothétique assurant la connexion entre l'implant et la dent prothétique.

De manière connue, un implant comprend une extrémité de fixation configurée pour être fixée à l'os maxillaire du patient et une extrémité gingivale configurée pour s'étendre dans la gencive du patient et comprenant un logement d'implant, configurée pour coopérer avec le pilier prothétique. Plus précisément, l'extrémité de fixation comprend un filetage extérieur de sorte à être vissée dans l'os maxillaire du patient. L'extrémité gingivale comprend quant à elle un logement d'implant comprenant un taraudage intérieur.

On décrit par la suite un pilier de cicatrisation selon l'invention configuré pour être monté dans un implant, avant de poser la dent prothétique et le pilier prothétique.

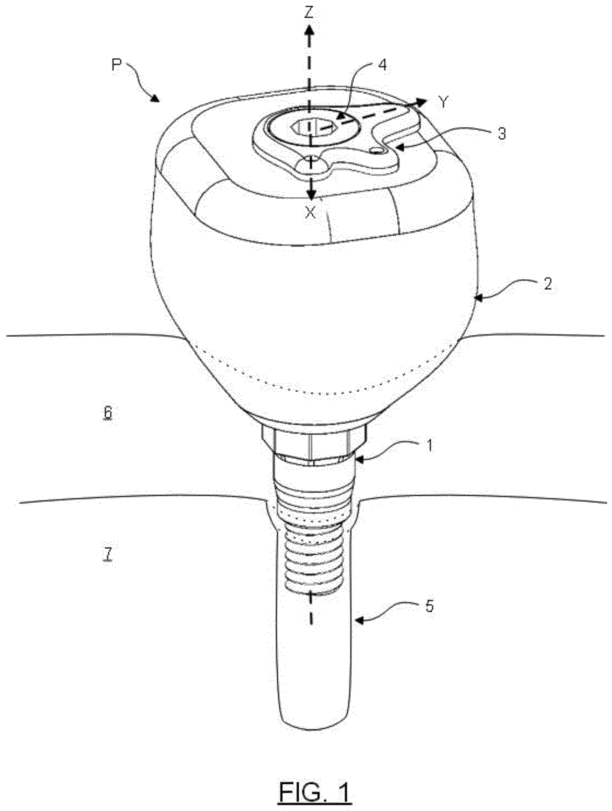

Selon l'invention, en référence à la figure 1, le pilier de cicatrisation P comprend un pied 1 et une tête 2 qui sont alignés selon un axe vertical Z et reliés par une vis de serrage 4 s'étendant selon un axe Z. Plus précisément, le pied 1 comprend une partie inférieure de pied configurée pour coopérer avec l'implant 5 et une partie supérieure de pied configurée pour coopérer avec la tête 2. La tête 2 comprend quant à elle une partie inférieure de tête configurée pour coopérer avec la partie supérieure de pied de manière à monter la tête 2 sur le pied 1 et une partie supérieure de tête ayant une forme déterminée.

Selon l'invention, toujours en référence à la figure 1, le pilier de cicatrisation P comprend en outre un organe de référence 3 définissant un repère orienté X, Y, Z à plusieurs dimensions. L'organe de référence 3 est d'une part configuré pour coopérer avec le pied 1 afin de définir une pluralité de positions élémentaires du repère orienté X, Y, Z par rapport au pied 1 selon l'axe Z et d'autre part monté sur la partie supérieure de tête afin de permettre de sélectionner au moins une position élémentaire optimale parmi la pluralité de positions élémentaires en fonction de la forme déterminée de la partie supérieure de tête. Un tel pilier de cicatrisation P selon l'invention présente ainsi l'avantage de ne pas devoir être retiré ou manipulé lors de la prise d'empreintes pour définir la forme et la taille de la dent prothétique, que la prise d'empreintes soit physique ou optique. La dent prothétique est en effet uniquement définie à partir de l'organe de référence 3, visible sans aucune manipulation, ce qui présente un gain de temps et de confort pour le patient en réduisant par ailleurs le risque de péri-implantite.

On décrit par la suite successivement les aspects structurels et fonctionnels du pied 1, de la tête 2, de l'organe de référence 3 et de la vis de serrage 4. A noter que dans l'ensemble de la présente demande de brevet, les termes « intérieur » et « extérieur » sont définis radialement par rapport à l'axe Z et les termes « inférieur » et « supérieur » sont définis par rapport à l'axe vertical Z, orienté du pied 1 vers la tête 2.

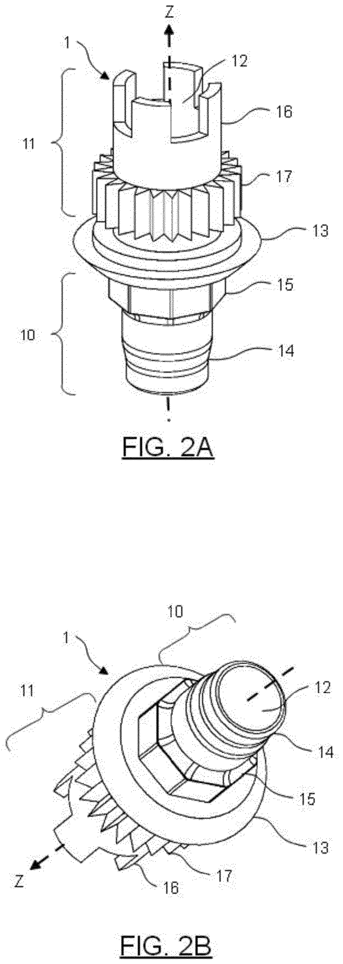

En référence aux figures 2A et 2B, le pied 1 s'étend selon l'axe Z et comprend une partie inférieure de pied 10, une partie supérieure de pied 11 et une cavité de pied 12 traversant verticalement la partie inférieure de pied 10 et la partie supérieure de pied 11 pour le passage de la vis de serrage 4. Dans l'exemple des figures 2A et 2B, la partie inférieure de pied 10 et la partie supérieure de pied 11 sont séparées par une couronne 13 d'axe Z. La couronne 13 s'étend en saillie radiale par rapport à l'axe Z de manière à servir d'appui axial à la tête 2, c'est-à-dire de butée, et permettre son bon positionnement axial selon l'axe Z. Si cette couronne 13 présente l'avantage d'être peu encombrante, il va de soi qu'elle pourrait être remplacée par un élément d'appui quelconque voire que la partie inférieure de pied 10 et la partie supérieure de pied 11 pourraient être en contact direct. Dans cet exemple, la couronne 13 comporte une surface supérieure plane pour coopérer avec la tête 2 de manière stable. De préférence, la couronne 13 comporte une surface inférieure tronconique, croissant du bas vers le haut selon l'axe Z, de manière à s'adapter à la forme de la gencive.

De préférence, comme illustré sur les figures 2A et 2B, la partie inférieure de pied 10 comprend une tige de pied 14 ayant une surface de révolution d'axe Z qui est filetée, ainsi qu'un anneau de liaison 15 monté au-dessus de la tige de pied 14 par rapport à l'axe Z, de forme polygonale, définissant dans cet exemple huit faces. Grâce à la tige de pied 14 et l'anneau de liaison 15, la partie inférieure de pied 10 est configurée pour assurer la liaison entre le pilier de cicatrisation P et l'implant 5. Plus précisément, la tige de pied 14 est configurée pour coopérer avec le filetage du logement d'implant de manière à visser le pied 1 sur l'implant 5 tandis que l'anneau de liaison 15 est configuré pour coopérer avec une paroi extérieure polygonale du logement d'implant de manière à empêcher un dévissage du pied 1 par rapport à l'implant 5, connu de l'homme du métier sous le terme de « système anti-rotation ». Dans l'exemple des figures 2A et 2B, l'anneau de liaison 15 comprend huit faces mais il va de soi que le nombre de faces pourrait être différent. Par ailleurs, il va de soi que l'anneau de liaison 15 pourrait être un système anti-rotation quelconque, voire qu'il pourrait ne pas y avoir de système anti-rotation.

La partie supérieure de pied 11 comprend quant à elle un premier organe d'emboîtement 17 comprenant une pluralité de dents radiales par rapport à l'axe Z configurées pour coopérer avec un deuxième organe d'emboîtement de la tête 2, se présentant sous la forme d'encoches radiales. De manière avantageuse, le premier organe d'emboîtement 17 et le deuxième organe d'emboîtement permettent de régler angulairement le montage de la tête 2 sur le pied 1. Autrement dit, la tête 2 peut être montée suivant différentes positions élémentaires possibles sur le pied 1. De tels organes d'emboîtement 17 jouent en outre le rôle de système anti-rotation, empêchant un mouvement de rotation éventuel entre le pied 1 et la tête 2 une fois montés. Dans l'exemple des figures 2A et 2B, le nombre de dents radiales s'élève à vingt-quatre, offrant un réglage angulaire fin. De manière avantageuse, la tête 2 peut être positionnée suivant vingt-quatre positions élémentaires différentes et s'adapter ainsi précisément à l'espace disponible laissé par la dent manquante dans la bouche du patient. Il va de soi que le nombre de dents radiales pourrait être inférieur, la finesse du réglage angulaire étant alors moindre, dans la limite inférieure de huit dents radiales. Le nombre de dent radiales pourrait également être supérieur, toutefois le gain apporté serait peu visible et augmenterait de façon superfétatoire la complexité du premier organe d'emboîtement 17. Par ailleurs, dans l'exemple des figures 2A et 2B, les dents radiales se présentent sous la forme de prismes triangulaire d'axe Z, permettant un montage aisé de la tête 2 sur le pied 1, mais il va de soi que les dents radiales pourraient prendre une forme différente, telle qu'une forme cylindrique de base rectangulaire.

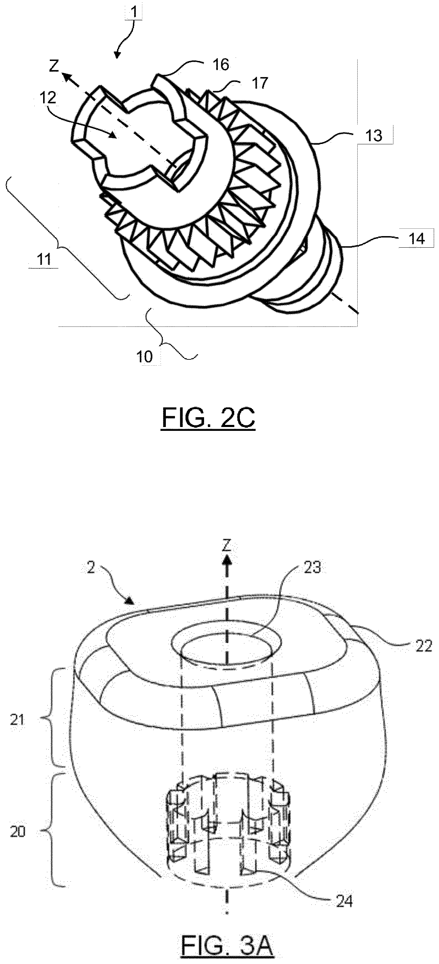

De préférence, toujours en référence aux figures 2A et 2B, la partie supérieure de tête 11 comprend en outre un troisième organe d'emboîtement 16 monté au-dessus du premier organe d'emboîtement 17 selon l'axe Z et comprenant des dents axiales d'axe Z de manière à pouvoir monter l'organe de référence 3 sur le pied 1. Le troisième organe d'emboîtement 16 joue également le rôle de système anti-rotation, empêchant un mouvement de rotation éventuel entre l'organe de référence 3 et le pied 1. Dans l'exemple des figures 2A et 2B, le nombre de dents axiales s'élève à quatre, offrant quatre positions élémentaires possibles pour l'organe de référence 3. Il va de soi que le nombre de dents axiales pourrait être différent, de préférence égal à trois pour faciliter le positionnement de l'organe de référence 3, comme illustré sur la figure 2C. Par ailleurs, dans l'exemple des figures 2A et 2B, les dents axiales se présentent sous la forme de cylindres de base rectangulaire d'axe Z, permettant un montage aisé de la tête 2 sur le pied 1, mais il va de soi que les dents axiales pourraient prendre une forme différente.

Ainsi, le pied 1 permet de définir des orientations angulaires précises vis-à-vis de l'implant 5, de la tête 2 et de l'organe de référence 3.

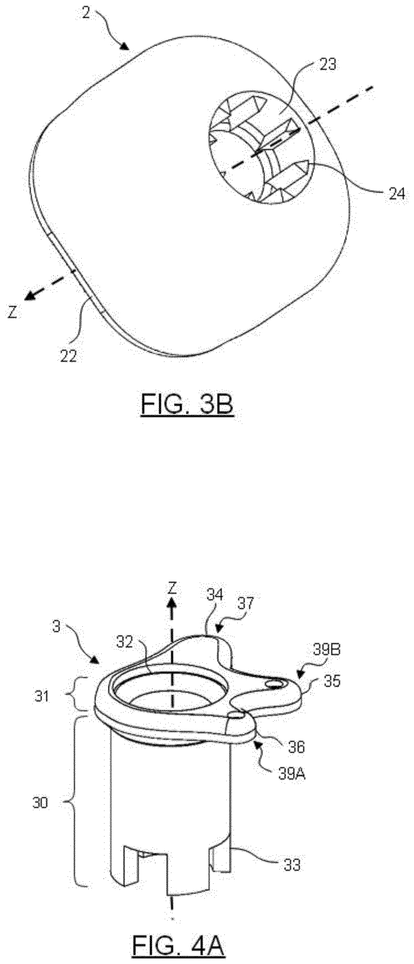

On décrit par la suite la tête 2 en référence aux figures 3A et 3B. Comme illustré sur ces deux figures, la tête 2 possède une forme périphérique Z et comprend une partie inférieure de tête 20, une partie supérieure de tête 21 et une cavité de tête 23 traversant la partie inférieure de tête 20 et la partie supérieure de tête 21 pour le passage de la vis de serrage 4.

De préférence, comme illustré sur les figures 3A et 3B, la partie inférieure de tête 20 comprend une paroi extérieure conique configurée pour favoriser une cicatrisation de la gencive suivant un profil concave autour de la paroi extérieure conique, de manière à ce qu'une fois la dent prothétique posée, l'interface entre la dent prothétique et la gencive soit naturelle et esthétique. La conicité de la paroi extérieure de la partie inférieure de tête 20 est fonction de la dent manquante à remplacer, suivant qu'il s'agisse d'une incisive, d'une canine, d'une prémolaire ou d'une molaire à titre d'exemples. De manière préférée, la paroi extérieure est dans la continuité de la couronne 13 du pied 1.

Selon un aspect préféré de l'invention, la tête 2 forme une dent prothétique de cicatrisation configurée pour avoir sensiblement la forme de la dent prothétique à poser. L'ajout d'une dent prothétique provisoire n'est donc pas nécessaire puisque la tête 2 assure cette fonction en plus de celle de cicatrisation de la gencive. En outre, de préférence, la partie supérieure de tête 21 comprend un bord périphérique 22 arrondi dans une optique esthétique et pour éviter que le bord ne soit tranchant et ne puisse blesser la bouche du patient.

Comme décrit précédemment, comme illustré sur les figures 3A et 3B, la partie inférieure de tête 20 comprend un deuxième organe d'emboîtement 24 comprenant une pluralité d'encoches radiales. Un tel deuxième organe d'emboîtement 24 est configuré pour coopérer avec le premier organe d'emboîtement 17 du pied 1, de manière à monter la tête 2 sur le pied 1 et à empêcher un mouvement de rotation relatif entre ladite tête 2 et ledit pied 1. De préférence, le nombre d'encoches radiales du deuxième organe d'emboîtement 24 est égal à celui du premier organe d'emboîtement 17, pour un montage aisé. De préférence également, la forme des encoches radiales est complémentaire de la forme des dents radiales du premier organe d'emboîtement 17, pour un montage aisé. Il va toutefois de soi que le nombre d'encoches radiales du deuxième organe d'emboîtement 24 ainsi que leur forme peuvent ne pas être complémentaires des dents radiales du premier organe d'emboîtement 17.

La tête 2 peut ainsi être positionnée de manière ergonomique sur le pied 1.

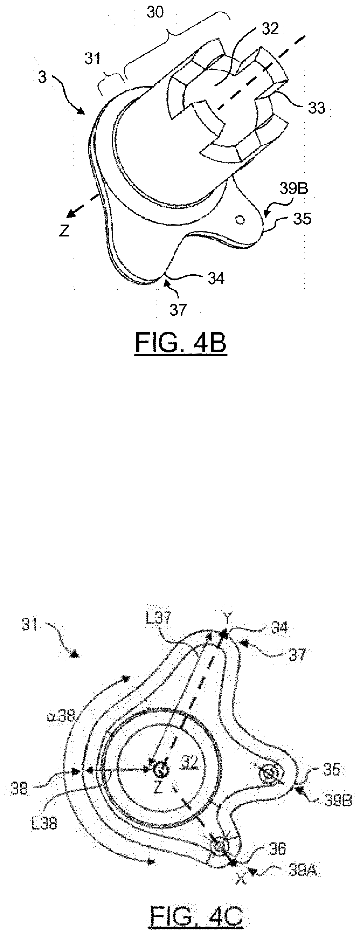

On décrit ci-après l'organe de référence 3 en référence aux figures 4A, 4B et 4C. Comme illustré sur les figures, l'organe de référence 3 comprend un corps 30 périphérique d'axe Z, un col 31 monté sur le corps 30 et une cavité de référence 32 d'axe Z traversant le corps 30 et le col 31 pour le passage de la vis de serrage 4. Le corps 30 est configuré pour coopérer avec la partie supérieure de pied 11. Le col 31 est quant à lui configuré pour être monté sur la partie supérieure de tête 21 et définir le repère X, Y, Z. Le col 31 s'étend dans un plan transversal à l'axe Z.

De manière avantageuse, la coopération du corps 30 et de la partie supérieure de pied 11 permet de lier le positionnement angulaire du pied 1 à celui de l'organe de référence 3 et en particulier à celui du col 31 qui est la partie visible de l'organe de référence 3 une fois le pilier de cicatrisation P monté. Ainsi, l'orientation du repère X, Y, Z défini par le col 31 est celle du pied 1 ce qui évite de devoir démonter le pilier de cicatrisation P lors de la prise d'empreintes. Le montage du col 31 sur la partie supérieure de tête 21 permet en outre de définir la position angulaire de la tête 2 dans le repère orienté X, Y, Z. L'organe de référence 3 et la tête 2 permettent en coopération d'entièrement déterminer la dent prothétique définitive. La cavité de référence 32 permet par ailleurs de solidariser l'organe de référence 3 au pilier de cicatrisation P.

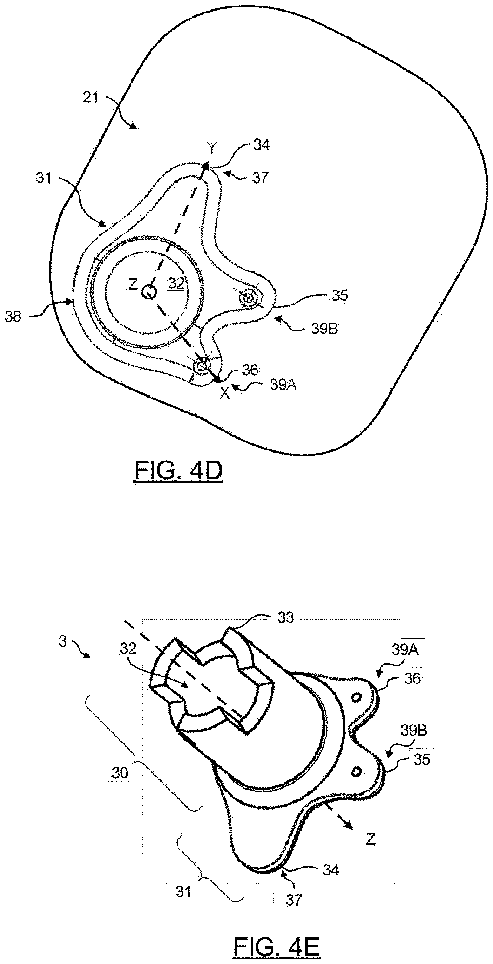

Comme illustré sur les figures 4A et 4B, le corps 30 est cylindrique de section circulaire et a un diamètre inférieur à celui de la cavité de tête 23 de sorte à pouvoir être inséré dans ladite cavité de tête 23. Par ailleurs, le corps 30 comprend un quatrième organe d'emboîtement 33 configuré pour coopérer avec le troisième organe d'emboîtement 16 du pied 1, de manière à monter l'organe de référence 3 sur le pied 1 et à empêcher tout mouvement de rotation relatif entre ledit organe de référence 3 et ledit pied 1. De préférence, le quatrième organe d'emboîtement 33 comporte des encoches axiales. Le nombre d'encoches axiales du quatrième organe d'emboîtement 33 est égal à celui de dents axiales du troisième organe d'emboîtement 16, pour un montage aisé. Dans l'exemple de la figure 4B, le quatrième organe d'emboîtement 33 comprend ainsi quatre encoches axiales pour coopérer avec le quatrième organe d'emboîtement 16 de la figure 2B. Dans l'exemple de la figure 4E, le quatrième organe d'emboîtement 33 comprend quant à lui trois encoches axiales pour coopérer avec le quatrième organe d'emboîtement 16 de la figure 2C. De préférence également, la forme des encoches axiales est complémentaire des dents axiales du troisième organe d'emboîtement 16, pour un montage aisé. Il va toutefois de soi que le nombre d'encoches axiales du quatrième organe d'emboîtement 33 ainsi que leur forme peuvent ne pas être complémentaires des dents axiales du troisième organe d'emboîtement 16.

Comme illustré sur la figure 4C, le col 31 comprend une portion en saillie 37 s'étendant radialement par rapport à l'axe Z et dont la direction radiale définit l'une des directions du repère X, Y, Z. De préférence, la portion en saillie 37 s'étend sur une longueur radiale en saillie L37 supérieure à 2mm, préférentiellement supérieure ou égale à 3mm de manière à indiquer de manière indirecte une orientation du pied 1. La longueur radiale en saillie L37 est inférieure à 5mm, de manière à limiter l'encombrement.

Une telle longueur radiale en saillie L37 permet également d'éviter que la portion en saillie 37 ne s'étende en saillie par rapport à la tête 2, ce qui provoquerait une gêne pour le patient et complexifierait le montage du pilier de fabrication P. Dans l'exemple de la figure 4C, la portion en saillie 37 est aligné axialement à l'une des encoches axiales du quatrième organe d'emboîtement 33 par souci de simplicité pour définir le repère X, Y, Z mais il va de soi que cela pourrait ne pas être le cas.

Dans l'exemple de la figure 4C, le col 31 comporte trois portions en saillie 37, 39A, 39B alignées chacune à une encoche axiale du quatrième organe d'emboîtement 33. En pratique, une seule portion en saillie 37 suffit pour définir le repère X, Y, Z, mais les autres portions en saillie 39A, 39B permettent de définir le repère X, Y, Z avec plus de finesse, pour pouvoir déterminer la dent prothétique le plus précisément possible. Il va de soi que le nombre de portions en saillie est quelconque, bien qu'un nombre supérieur à 3 augmenterait l'encombrement de manière inutile. Dans cet exemple, chacune des portions en saillie 37, 39A, 39B a de plus une longueur radiale en saillie L37 différente afin de pouvoir distinguer simplement la portion en saillie 37 des autres. Il va cependant de soi que les portions en saillie 37, 39A, 39B pourraient comporter la même longueur radiale en saillie L37.

Plus précisément, les portions en saillie 37, 39A, 39B du col 31 se présentent sous la forme de doigts de référence 34, 35, 36, de préférence arrondis en leur extrémité pour ne pas gêner le patient au toucher. Une telle forme permet avantageusement de définir simplement une direction radiale toutefois il va de soi que les portions en saillie 37, 39A, 39B pourraient avoir une forme différente quelconque. En particulier, le col 31 pourrait avoir une section polygonale dont les sommets forment les portions en saillie 37, 39A, 39B. Le nombre de sommets pourrait être égal au nombre d'encoches axiales du quatrième organe d'emboîtement 33. Les portions en saillie 37, 39A, 39B pourraient également avoir une forme différente les unes des autres afin de les distinguer.

Dans l'exemple de la figure 4C, le col 31 comprend en outre une portion réduite 38 s'étendant radialement par rapport à l'axe Z. La portion réduite 38 est avantageusement configurée pour réduire l'encombrement de l'organe de référence 3 sur une plage angulaire donnée. En pratique, comme illustré sur la figure 4D, il arrive en effet que l'implant ne soit pas positionné au centre de l'espace laissé par la dent manquante. Dans ce cas, la tête 2 s'étend de manière décentrée par rapport à l'axe Z, c'est-à-dire que la cavité de tête 23 est décentrée par rapport à la tête 2. L'organe de référence 3 peut dans ce cas être monté angulairement de sorte que la portion réduite 38 soit avantageusement située là où la distance radiale séparant la cavité de tête 32 des parois extérieures de la partie supérieure de tête 21 est la plus faible.

Grâce à la portion réduite 38, l'organe de référence 3 ne s'étend pas en saillie par rapport à la tête 2, même si la tête 2 est décentrée par rapport à l'axe Z.
De préférence, comme illustré sur les figures 4C et 4D, la portion réduite 38 comporte une longueur radiale réduite L38 réduite inférieure à 3mm, de préférence inférieure ou égale à 2mm, afin d'être efficace même dans le cas d'un décentrage prononcé. Préférentiellement, la longueur radiale réduite L38 est supérieure à 0,5mm. De préférence également, la portion réduite 38 s'étend sur une plage angulaire α38 autour de l'axe Z supérieure à 90°, préférentiellement supérieure à 150°, préférentiellement encore supérieure à 180°, afin d'être efficace même dans le cas d'un décentrage prononcé.

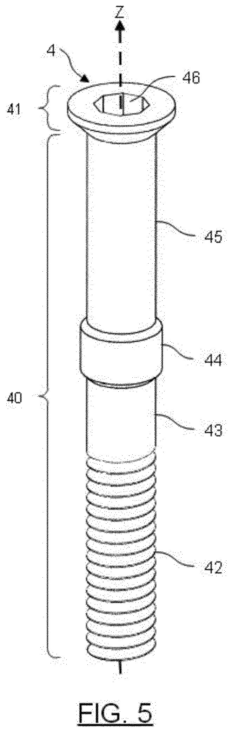

On décrit par la suite la vis de serrage 4 en référence à la figure 5. En référence à la figure 5, la vis de serrage 4 comprend une tige 40 d'axe Z et une tête de vis 41 montée sur la tige 40. La tige 40 a un diamètre configuré pour être inférieur à celui de la cavité de pied 12, de la cavité de tête 23, de la cavité de référence 32 et du logement d'implant. Ainsi la tige 40 est configurée pour être insérée dans la cavité de pied 12, la cavité de tête 23, la cavité de référence 32 et le logement d'implant, de manière à monter le pilier de cicatrisation P sur l'implant.

De préférence, comme illustré sur la figure 5, la tige 40 comprend une première partie de tige 42 filetée configurée pour être vissée dans le logement d'implant, une deuxième partie de tige 43 configurée pour s'étendre dans la partie inférieure de tête 10, une troisième partie de tige 44 de diamètre supérieur au diamètre intérieur de la couronne 13 du pied 1 et configurée pour s'étendre dans la partie supérieure de tête 11 et une quatrième partie de tige 45 configurée pour s'étendre dans la cavité de tête 23 et dans la cavité de référence 32. Il va toutefois de soi que la tige 40 pourrait ne comprendre qu'une unique partie de tige quelconque ou qu'une sélection de parties précitées.

De préférence, comme illustré sur la figure 5, la tête de vis 41 est plate de manière à limiter l'encombrement de l'organe de référence 3 et comprend une empreinte de tête 46 configurée pour recevoir un outil, tel qu'un tournevis, de manière à visser la vis de serrage 4 dans le logement d'implant et serrer l'ensemble.

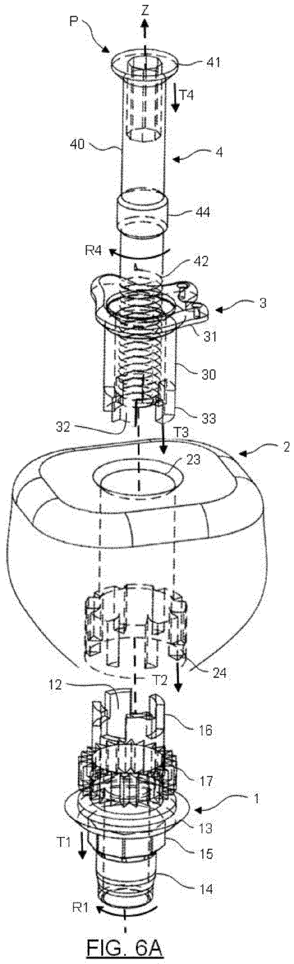

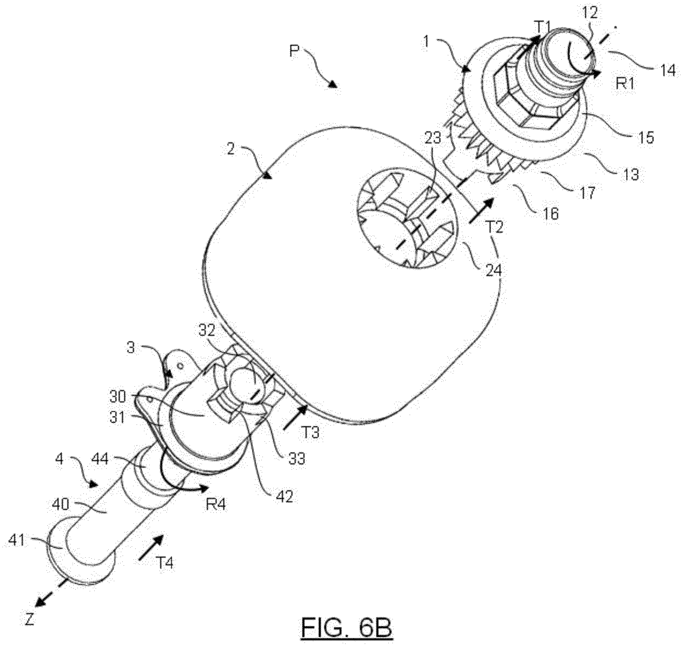

On décrit par la suite un procédé de montage du pilier de cicatrisation P selon l'invention, en référence aux figures 6A et 6B, qui comprend quatre étapes de montage successives détaillées ci-après.

Au cours de la première étape de montage, le pied 1 est inséré dans le logement d'implant par un mouvement de translation T1 longitudinal par rapport à l'axe Z puis la tige de pied 14 est vissée dans le logement d'implant par un mouvement de rotation R1 autour de l'axe Z jusqu'à ce que l'anneau de liaison 15 soit bloqué dans le logement d'implant par complémentarité de formes. A la fin de la première étape de montage, le pied 1 est monté fixe dans le logement d'implant.

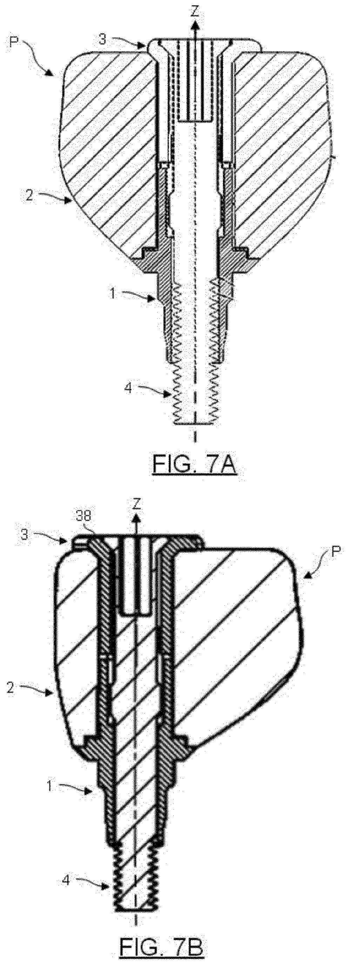

Au cours de la deuxième étape de montage, la tête 2 est montée sur le pied 1 par un mouvement de translation T2 longitudinal par rapport à l'axe Z jusqu'à ce que le premier organe d'emboîtement 17 et le deuxième organe d'emboîtement 24 coopèrent et que la tête 12 soit en contact avec la couronne 13 du pied 1. L'orientation angulaire entre la tête 2 et le pied 1 est définie de manière précise. A la fin de la deuxième étape de montage, comme illustré sur la figure 7A, la tête 2 est en appui sur la couronne 13 et est montée fixe de manière radiale et tangentielle par rapport à l'axe Z sur le pied 1. La tête 2 est en revanche montée libre en translation longitudinale suivant Z par rapport au pied 1.

Au cours de la troisième étape de montage, l'organe de référence 3 est monté sur la tête 2 par insertion du corps 30 dans la cavité de tête 23 suivant un mouvement de translation T3 longitudinal jusqu'à ce que le troisième organe d'emboîtement 16 du pied 1 et le quatrième organe d'emboîtement 33 de l'organe de référence 3 coopèrent. L'orientation du col 31 définissant le repère orienté est réalisée avant le mouvement de translation T3 de manière à ce que l'organe de référence 3 ne s'étende pas en saillie de la tête 2 lors d'un montage décentré, tel que représenté sur la figure 7B. Dans l'exemple de la figure 7B, la portion réduite 38 est ainsi positionnée angulairement là où la partie supérieure de tête 21 présente la plus faible longueur radiale. A la fin de la troisième étape de montage, comme illustré sur les figures 7A et 7B, l'organe de référence 3 est monté fixe de manière radiale et tangentielle par rapport à l'axe Z sur la tête 2 et monté libre en translation longitudinale suivant Z par rapport à ladite tête 2. L'orientation angulaire entre l'organe de référence 3 et le pied 1 est définie de manière précise.

Au cours de la quatrième étape de montage, la vis de serrage 4 est insérée successivement dans la cavité de référence 32, dans la cavité de tête 23, dans la cavité de pied 12 et dans le logement d'implant par un mouvement de translation T4 longitudinal par rapport à l'axe Z puis par un mouvement de rotation R4 autour de l'axe Z de manière à visser la première portion de tige 42 dans le logement d'implant. Le mouvement de rotation R4 est stoppé lorsque la troisième portion de tige 44 est en appui sur la couronne 13. A la fin de la quatrième étape de montage, comme illustré sur les figures 7A et 7B, la vis de serrage 4 bloque la tête 2 et l'organe de référence 3 dans la direction longitudinale par rapport à l'axe Z. Par ailleurs, la vis de serrage 4 est montée fixe dans le logement d'implant.

Grâce au pilier de cicatrisation selon l'invention précédemment décrit, la cicatrisation de la gencive s'opère suivant un profil concave si bien qu'une fois la dent prothétique posée, le rendu est naturel et esthétique. Par ailleurs, lors de la prise d'empreintes, le pilier de cicatrisation P n'a pas besoin d'être retiré, ce qui évite des manipulations chronophages et désagréables pour le patient et réduit le risque de péri-implantite. En outre, l'organe de référence 3 fournit un repère orienté X, Y, Z lisible par tout scanner et la tête 2 joue le rôle de dent prothétique provisoire, évitant l'ajout de cette pièce nécessitant d'autres manipulations. Par lecture du repère défini par l'organe de référence 3, l'utilisateur détermine de manière rapide, directe et précise l'orientation du pied 1, ce qui permet de former une dent définitive qui sera parfaitement positionnable. Enfin, ce pilier de cicatrisation P présente l'avantage de permettre un positionnement angulaire précis de la tête 2 dans l'espace disponible laissé par la dent manquante.

## Revendications

1. Pilier de cicatrisation (P) configuré pour être monté dans un implant (5) avant la pose d'une dent prothétique, le pilier de cicatrisation (P) comprenant un pied (1) et une tête (2) qui sont alignés selon un axe Z et reliés par une vis de serrage (4) s'étendant selon l'axe Z, le pied (1) comprenant une partie inférieure de pied (10) configurée pour coopérer avec l'implant (5) et une partie supérieure de pied (11), la tête (2) comprenant une partie inférieure de tête (20) configurée pour coopérer avec la partie supérieure de pied (11), de manière à monter la tête (2) sur le pied (1), et une partie supérieure de tête (21) ayant une forme déterminée, ledit pilier de cicatrisation (P) comprenant au moins un organe de référence (3) définissant un repère orienté (X, Y, Z) selon au moins deux dimensions et configuré pour coopérer avec le pied (1) afin de définir une pluralité de positions élémentaires du repère orienté (X, Y, Z) par rapport audit pied (1) selon l'axe Z, ledit organe de référence (3) étant monté de manière mobile et rapportée sur la partie supérieure de tête (21) afin de permettre de sélectionner au moins une position élémentaire optimale parmi la pluralité de positions élémentaires en fonction de la forme déterminée de ladite partie supérieure de tête (21).

2. Pilier de cicatrisation (P) selon la revendication 1, dans lequel l'organe de référence (3) comprend au moins un col (31) comprenant au moins une portion en saillie (37) s'étendant radialement par rapport à l'axe Z, de manière à définir le repère (X, Y, Z).

3. Pilier de cicatrisation (P) selon la revendication 2, dans lequel la portion en saillie (37) se présente sous la forme d'au moins un doigt de référence (34, 35, 36) s'étendant radialement par rapport à l'axe Z.

4. Pilier de cicatrisation (P) selon l'une des revendications 1 à 3, dans lequel l'organe de référence (3) comprend au moins un col (31) comprenant au moins une portion réduite (38) s'étendant radialement par rapport à l'axe Z et comportant une longueur radiale réduite (L38) inférieure à 3mm, de préférence inférieure ou égale à 2mm.

5. Pilier de cicatrisation (P) selon la revendication 4, dans lequel la portion réduite (38) s'étend sur une plage angulaire (α38) autour de l'axe Z supérieure à 90°, de préférence supérieure à 150°.

6. Pilier de cicatrisation (P) selon l'une des revendications 1 à 5, dans lequel l'organe de référence (3) comprend une cavité de référence (32) d'axe Z traversante, au sein de laquelle s'étend la vis de serrage (4).

7. Pilier de cicatrisation (P) selon l'une des revendications 1 à 6, la partie supérieure de pied (11) comprenant au moins un premier organe d'emboîtement (17), la partie inférieure de tête (20) comprenant au moins un deuxième organe d'emboîtement (24) configuré pour coopérer avec le premier organe d'emboîtement (17) de manière à monter la tête (2) sur le pied (1), le premier organe d'emboîtement (17) comprenant au moins huit dents radiales par rapport à l'axe Z et le deuxième organe d'emboîtement (24) comprend au moins huit encoches radiales configurées pour coopérer avec les dents radiales afin de définir une pluralité de positions angulaires relatives entre le pied (1) et la tête (2) par rapport à l'axe Z.

8. Pilier de cicatrisation (P) selon l'une des revendications 1 à 7, dans lequel la tête (2) comprend une cavité de tête (23) d'axe Z traversante, au sein de laquelle s'étend la vis de serrage (4).

9. Ensemble d'un implant (5) et d'un pilier de cicatrisation (P) selon l'une des revendications 1 à 8, l'implant (5) comprenant une extrémité de fixation configurée pour être fixée à l'os maxillaire (7) d'un patient et une extrémité gingivale configurée pour s'étendre dans la gencive (6) du patient et comprenant un logement d'implant comprenant un taraudage, la partie inférieure de pied (10) du pilier de cicatrisation (P) étant montée dans le logement d'implant et la vis de serrage (4) du pilier de cicatrisation (P) coopérant avec le taraudage du logement d'implant.

## Patentansprüche

1. Gingivaformer (P), der ausgelegt ist, um vor dem Einsetzen eines prothetischen Zahns in einem Implantat (5) angebracht zu werden, wobei der Gingivaformer (P) einen Fuß (1) und einen Kopf (2) umfasst, die gemäß einer Z-Achse ausgerichtet und durch eine Spannschraube (4) verbunden sind, die sich gemäß der Z-Achse erstreckt, wobei der Fuß (1) einen unteren Fußteil (10), der ausgelegt ist, um mit dem Implantat (5) zusammenzuwirken, und einen oberen Fußteil (11) umfasst, wobei der Kopf (2) einen unteren Kopfteil (20), der ausgelegt ist, um mit dem oberen Fußteil (11) derart zusammenzuwirken, dass der Kopf (2) auf dem Fuß (1) angebracht wird, und einen oberen Kopfteil (21) mit einer bestimmten Form umfasst, wobei der Gingivaformer (P) mindestens ein Referenzorgan (3) umfasst, das ein Koordinatensystem (X, Y, Z) definiert, dass gemäß mindestens zwei Dimensionen ausgerichtet und ausgelegt ist, um mit dem Fuß (1) zusammenzuwirken, um eine Vielzahl von Elementarpositionen des in Bezug auf den genannten Fuß (1) ausgerichteten Koordinatensystems (X, Y, Z) gemäß der Z-Achse zu definieren, wobei das Referenzorgan (3) beweglich und auf dem oberen Kopfteil (21) als Einsatz angebracht ist, um die Auswahl mindestens einer optimalen Elementarposition aus der Vielzahl von Elementarpositionen in Abhängigkeit von der bestimmten Form des oberen Kopfteils (21) zu ermöglichen.

2. Gingivaformer (P) nach Anspruch 1, wobei das Referenzorgan (3) mindestens einen Hals (31) mit mindestens einem vorstehenden Abschnitt (37) umfasst, der sich radial in Bezug auf die Z-Achse derart erstreckt, dass das Koordinatensystem (X, Y, Z) definiert wird.

3. Gingivaformer (P) nach Anspruch 2, wobei der vorstehende Abschnitt (37) in Form von mindestens einem Referenzfinger (34, 35, 36) vorliegt, der sich radial in Bezug auf die Z-Achse erstreckt.

4. Gingivaformer (P) nach einem der Ansprüche 1 bis 3, wobei das Referenzorgan (3) mindestens einen Hals (31) umfasst, der mindestens einen reduzierten Abschnitt (38) umfasst, der sich radial in Bezug auf die Z-Achse erstreckt und eine reduzierte radiale Länge (L38) von unter 3 mm, vorzugsweise von unter oder gleich 2 mm, aufweist.

5. Gingivaformer (P) nach Anspruch 4, wobei sich der reduzierte Abschnitt (38) über einen Winkelbereich (α38) um die Z-Achse erstreckt, der größer als 90°, vorzugsweise größer als 150°, ist.

6. Gingivaformer (P) nach einem der Ansprüche 1 bis 5, wobei das Referenzorgan (3) einen durchgehenden Referenzhohlraum (32) in der Achse Z umfasst, in dem sich die Spannschraube (4) erstreckt.

7. Gingivaformer (P) nach einem der Ansprüche 1 bis 6, wobei der obere Fußteil (11) mindestens ein erstes Einsteckorgan (17) umfasst, der untere Kopfteil (20) mindestens ein zweites Einsteckorgan (24) umfasst, das ausgelegt ist, um mit dem ersten Einsteckorgan (17) derart zusammenzuwirken, dass der Kopf (2) auf dem Fuß (1) angebracht wird, wobei das erste Einsteckorgan (17) mindestens acht radiale Zähne in Bezug auf die Z-Achse umfasst und das zweite Einsteckorgan (24) mindestens acht radiale Kerben umfasst, die ausgelegt sind, um mit den radialen Zähnen zusammenwirken, um eine Vielzahl von relativen Winkelpositionen zwischen dem Fuß (1) und dem Kopf (2) in Bezug auf die Z-Achse zu definieren.

8. Gingivaformer (P) nach einem der Ansprüche 1 bis 7, wobei der Kopf (2) eine durchgehende Kopfvertiefung (23) in der Z-Achse aufweist, in der sich die Spannschraube (4) erstreckt.

9. Anordnung aus einem Implantat (5) und einem Gingivaformer (P) nach einem der Ansprüche1 bis 8, wobei das Implantat (5) ein Befestigungsende, das ausgelegt ist, um am Kieferknochen (7) eines Patienten befestigt zu werden, und ein gingivales Ende umfasst, das ausgelegt ist, um sich in das Zahnfleisch (6) des Patienten zu erstrecken, und eine Implantataufnahme umfasst, die ein Innengewinde umfasst, wobei der untere Fußteil (10) des Gingivaformers (P) in der Implantataufnahme angebracht ist und die Spannschraube (4) des Gingivaformers (P) mit dem Innengewinde der Implantataufnahme zusammenwirkt.

## Claims

1. A healing abutment (P) configured to be mounted in an implant (5) prior to placing a prosthetic tooth, the healing abutment (P) comprising a foot (1) and a head (2) which are aligned along an axis Z and connected by a clamping screw (4) extending along the axis Z, the foot (1) comprising a lower foot part (10) configured to cooperate with the implant (5) and an upper foot part (11), the head (2) comprising a lower head part (20) configured to cooperate with the upper foot part (11), so as to mount the head (2) onto the foot (1), and an upper head part (21) having a determined shape, said healing abutment (P) comprising at least one reference member (3) defining an oriented reference frame (X, Y, Z) in at least two dimensions and configured to cooperate with the foot (1) in order to define a plurality of elemental positions of the oriented reference frame (X, Y, Z) with respect to said foot (1) along the axis Z, said reference member (3) being movably mounted as an insert on the upper head part (21) in order to allow the selection of at least one optimal elemental position among the plurality of elemental positions according to the determined shape of said upper head part (21).

2. The healing abutment (P) according to claim 1, wherein the reference member (3) comprises at least one neck (31) comprising at least one protruding portion (37) extending radially relative to the axis Z, so as to define the reference frame (X, Y, Z).

3. The healing abutment (P) according to claim 2, wherein the protruding portion (37) is in the form of at least one reference finger (34, 35, 36) extending radially relative to the axis Z.

4. The healing abutment (P) according to one of claims 1 to 3, wherein the reference member (3) comprises at least one neck (31) comprising at least one reduced portion (38) extending radially relative to the axis Z and comprising a reduced radial length (L38) of less than 3mm, preferably less than or equal to 2mm.

5. The healing abutment (P) according to claim 4, wherein the reduced portion (38) extends over an angular range (α38) about the axis Z greater than 90°, preferably greater than 150°.

6. The healing abutment (P) according to one of claims 1 to 5, wherein the reference member (3) comprises a reference through cavity (32) of axis Z, within which the clamping screw (4) extends.

7. The healing abutment (P) according to one of claims 1 to 6, the upper foot part (11) comprising at least one first interlocking member (17), the lower head part (20) comprising at least one second interlocking member (24) configured to cooperate with the first interlocking member (17) so as to mount the head (2) onto the foot (1), the first interlocking member (17) comprising at least eight radial teeth relative to the axis Z and the second interlocking member (24) comprises at least eight radial notches configured to cooperate with the radial teeth to define a plurality of relative angular positions between the foot (1) and the head (2) relative to the axis Z.

8. The healing abutment (P) according to one of claims 1 to 7, wherein the head (2) comprises a head through cavity (23) of axis Z, within which the clamping screw (4) extends.

9. An assembly of an implant (5) and a healing abutment (P) according to one of claims 1 to 8, the implant (5) comprising an attachment end configured to be attached to a patient's maxillary bone (7) and a gingival end configured to extend into the patient's gingiva (6) and comprising an implant housing comprising a female thread, the lower foot part (10) of the healing abutment (P) being mounted in the implant housing and the clamping screw (4) of the healing abutment (P) cooperating with the female thread of the implant housing.
